(19) Europäisches Patentamt
European Patent Office
Office européen des brevets

(11) **EP 1 727 274 B1**

(12) **EUROPÄISCHE PATENTSCHRIFT**

(45) Veröffentlichungstag und Bekanntmachung des Hinweises auf die Patenterteilung:
**09.11.2011 Patentblatt 2011/45**

(51) Int Cl.:
*H02P 29/00* (2006.01)    *F16K 31/04* (2006.01)
*F15B 21/08* (2006.01)    *G05B 19/23* (2006.01)

(21) Anmeldenummer: **05011437.0**

(22) Anmeldetag: **27.05.2005**

(54) **Verfahren und Vorrichtung zur Betätigung eines Stellelements**

Method and Device for operating a servo actuator

Procédé et dispositif de fonctionnement d'un servomoteur

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**29.11.2006 Patentblatt 2006/48**

(73) Patentinhaber: **SIEMENS AKTIENGESELLSCHAFT**
**80333 München (DE)**

(72) Erfinder: **Lendi, Dominic**
**8925 Ebertwil (CH)**

(56) Entgegenhaltungen:
**EP-A- 0 851 163     US-A- 5 829 335**
**US-A- 6 084 370**

**EP 1 727 274 B1**

**Beschreibung**

Die Erfindung bezieht sich auf ein Verfahren zur Betätigung eines Stellelements sowie auf einen Stellantrieb zur Durchführung des Verfahrens gemäss den Oberbegriffen der Ansprüche 1 und 8.

Das erfindungsgemässe Verfahren ist geräuscharm und energieeffizient und wird vorteilhaft in ventilantrieben zur Ermittlung des Schliesspunktes eines Ventils eingesetzt. Derartige Verfahren sind jedoch allgemein in Stellantrieben zur Ermittlung eines mechanischen Anschlags eines Stellelements oder zur Detektierung von Stellgliedblockaden einsetzbar. Ein erfindungsgemässes Verfahren ist insbesondere dann in einem Stellantrieb einsetzbar, wenn ein Stellglied kraftkontrolliert, geräuscharm und energieeffizient zu betätigen ist; die Erfindung ist also vorteilhaft in der Heizungs-, Lüftungs- , Kälte- und Klimatechnik einsetzbar, beispielhaft bei einem drahtlos ferngesteuerten Radiatorventil.

Aus DE 41 07 860 A1 ist ein Verfahren zur Erfassung der Schliessposition eines Ventils bekannt, in dem ein Stromanstieg eines elektrischen Antriebsmotors erfasst wird. Ferner ist beispielsweise aus EP 0 050 960 A oder aus EP 1 015 800 A bekannt, ein Abfallen der Drehzahl eines elektrischen Antriebsmotors zur Erfassung der Schliessposition eines Ventils auszuwerten.

In EP 1 015 800 A wird vorgeschlagen, ein Ventil bei konstanter Motorspannung in Schliessrichtung zu bewegen und bei einem gewissen Drehzahlabfall den Motor zu stoppen und den Schliesspunkt zu berechnen. Die damit erforderliche Regelung der Speisespannung für den Motor kann bei Batteriespeisung zu einer wesentlichen Verkürzung der Batterielebensdauer führen.

Zur Einsparung von Sensoren und zur Optimierung der Regeldynamik bei elektrohydraulischen Vorschubantrieben schlägt das Dokument US 5 829 335 die on-line Auswertung des Systemmodells und die Berechnung der nötigen Zustandsvariablen vor.

Der Erfindung liegt die Aufgabe zu Grunde, ein alternatives Verfahren zur Betätigung eines Stellelements anzugeben, mit dem eine Endlage des Stellelements oder eine Blockade des Stellantriebs detektierbar ist, und dessen Durchführung wenig Energie benötigt und damit insbesondere auch in Batterie betriebenen Stellantrieben gut einsetzbar ist. Weiter ist ein Stellantrieb zum Betätigen eines Stellglieds zu schaffen, mit dem das Verfahren durchführbar ist.

Die genannte Aufgabe wird erfindungsgemäss durch die Merkmale der Ansprüche 1 und 8 gelöst.

Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:

Fig. 1    ein Blockschaltbild einer Regel- und Steuereinrichtung eines Stellantriebs,
Fig. 2    ein Blockschaltbild zur Funktionsweise eines Motortreibermoduls,
Fig. 3    Zustände eines Stellglieds,
Fig. 4    ein Diagramm zum verlauf einer Stellkraft, und
Fig. 5    ein Rechenmodul zur Berechung der Stellkraft.

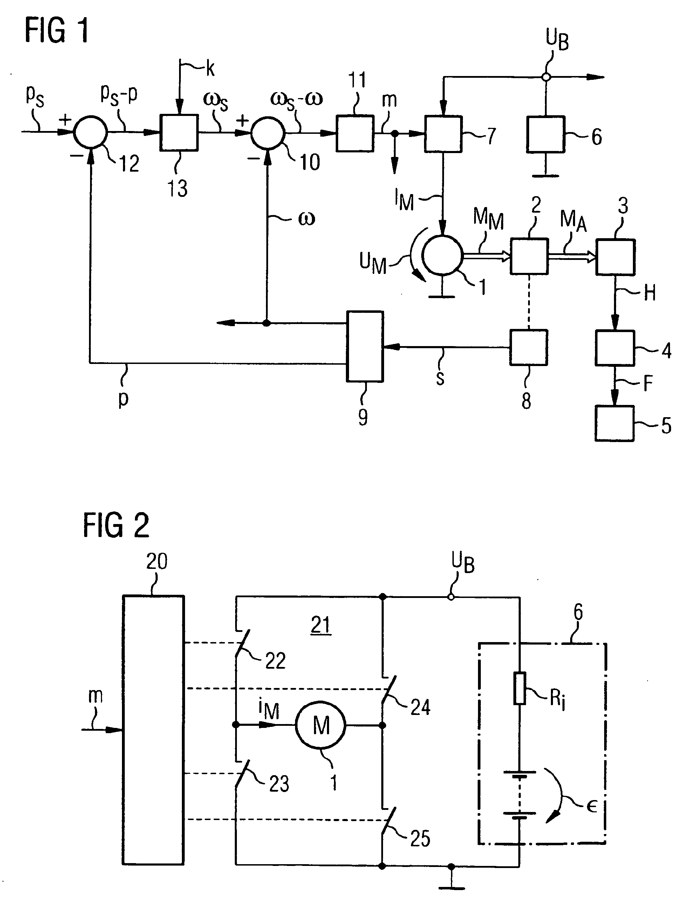

In der Fig. 1 ist mit 1 ein Elektromotor bezeichnet, der über ein Getriebe 2 mit einem Transformationselement 3 gekoppelt ist. Ein vom Elektromotor 1 generiertes Drehmoment $M_M$ wird durch das Getriebe 2 in ein an das Transformationselement 3 übertragenes Antriebsmoment $M_A$ umgesetzt. Das Transformationselement 3 wandelt eine vom Elektromotor 1 generierte Drehbewegung in eine Längsbewegung mit einem Hub H. Durch die Längsbewegung wirkt ein Stössel 4 mit einer Stellkraft F auf ein Stellglied 5. Das Stellglied 5 ist hier ein Ventil mit einem Schliesskörper, auf den der Stössel 4 wirkt. Das Ventil ist typischerweise ein stufenlos verstellbares Ventil in einem Heiz- oder Kühlwasserkreis, beispielhaft ein Radiatorventil.

Der Elektromotor 1 wird über ein mit einer Spannungsquelle 6 verbundenes Motortreibermodul 7 gespeist.

Am Getriebe 2 ist eine Sensoreinrichtung 8 zur Erfassung einer Drehbewegung angeordnet. Ein von der Sensoreinrichtung 8 generiertes Signal s wird beispielhaft auf ein Berechnungsmodul 9 geführt. Mit Vorteil werden im Berechnungsmodul 9 mit Hilfe des Signals s ein Geschwindigkeitssignal $\omega$ und ein Positionssignal p generiert.

Eine Regeleinrichtung eines Stellantriebs für das Stellglied 5 weist eine innere geschlossene Regelschleife und mit Vorteil auch eine äussere geschlossene Regelschleife auf. Die innere Regelschleife führt von der Sensoreinrichtung 8 über das vom Berechnungsmodul 9 umgesetzte Geschwindigkeitssignal $\omega$ und eine erste vergleichseinrichtung 10 über ein erstes Regelmodul 11 auf das Motortreibermodul 7. Die äussere Regelschleife führt von der Sensoreinrichtung 8 über das vom Berechnungsmodul 9 umgesetzte Positionssignal p und eine zweite Vergleichseinrichtung 12 über ein zweites Regelmodul 13 auf die erste Vergleichseinrichtung 10, und von da über das erste Regelmodul 11 auf das Motortreibermodul 7. An der zweiten Vergleichseinrichtung 12 wird als Führungsgrösse mit Vorteil ein Sollpositionssignal $p_s$ des Stellelements eingespeist.

In einem vorteilhaften Ausführungsbeispiel des Stellantriebs ist der Elektromotor 1 ein Gleichstrommotor und das Motortreibermodul 7 weist eine Treibereinheit 20 (Fig. 2) und eine an der Batteriespannung $U_B$ liegende Brückenschaltung 21 zur Ansteuerung des Elektromotors 1 auf. vier elektronische Schalter 22, 23, 24 und 25 der Brückenschaltung 21 sind von der Treibereinheit 20 ansteuerbar. Durch entsprechende Zustände der vier Schalter 22, 23, 24 und 25 sind die Dauer und die Polarität eines Stromes $I_M$ durch den Elektromotor 1 von der Treibereinheit 20 aus steuerbar. Die Treibereinheit 20 ist mit Vorteil über ein Steuersignal m ansteuerbar.

Das Steuersignal m ist beispielhaft ein Signal, dessen Pulsweite durch das erste Regelmodul 11 moduliert wird.

Die Treibereinheit 20 ist beispielhaft ein integrierter Baustein, während die elektronischen Schalter 22, 23, 24 und 25 beispielsweise durch MOS-Feldeffekttransistoren verwirklicht sind.

Grundsätzlich ist das Motortreibermodul 7 in seinem Aufbau an einen gewählten Motorentyp anzupassen, wobei je nach Anforderung an den Stellantrieb ein geeigneter Motorentyp gewählt und beispielsweise an Stelle der Brückenschaltung 21 eine an den Motortyp angepasste elektronische Kommutierungsschaltung eingesetzt wird.

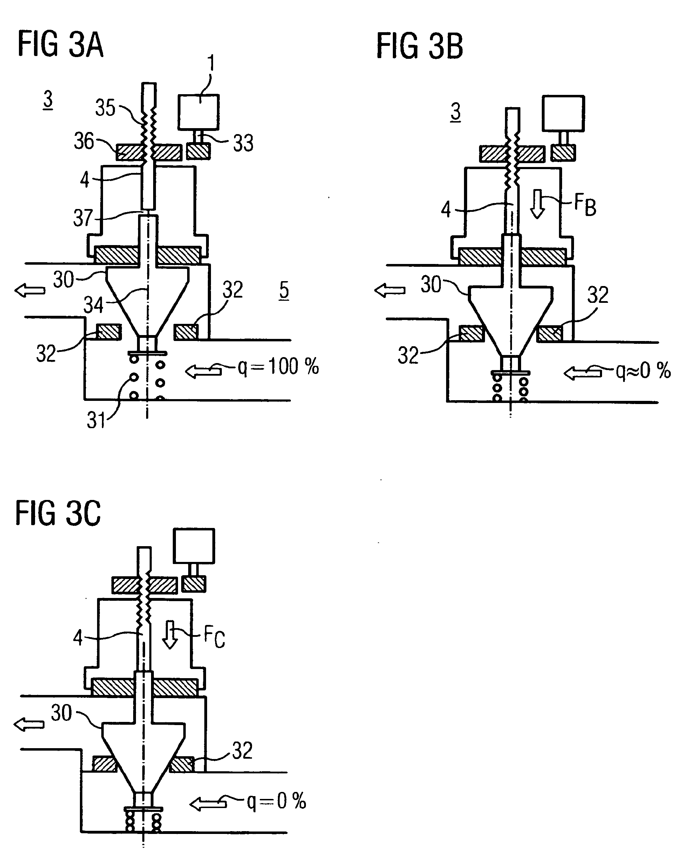

Das in den Fig. 3a, 3b und 3c vereinfacht dargestellte Stellglied 5 ist beispielhaft ein Ventil mit einem als Stellelement nutzbaren Schliesskörper 30, der über den Stössel 4 gegen die Kraft einer Feder 31 zu einem Ventilsitz 32 hin bewegbar ist. Der Stössel 4 ist, je nach Drehrichtung einer Antriebsspindel 33 des Elektromotors 1, auf einer Längsachse 34 des Schliesskörpers 30 hin und her bewegbar. Das Transformationselement 3 ist hier ein am Stössel 4 ausgebildetes Aussengewinde 35 in Verbindung mit einem an einem Getrieberad 36 ausgebildeten Innengewinde.

In der Fig. 3a ist das Ventil in offenem Zustand dargestellt, der Schliesskörper 30 ist also in einer ersten Endlage, ein möglicher Durchfluss q für ein Fluid ist 100%. Auch der Stössel 4 ist in einer Endlage, wobei sich zwischen dem Stössel 4 und dem Schliesskörper 30 ein Luftspalt 37 bildet. Insbesondere dann, wenn der Ventilantrieb als Universalantrieb auf unterschiedliche ventiltypen montierbar ist, werden individuell erreichbare Endpositionen bei Schliesskörper und Ventilantrieb nicht genau übereinstimmen. Mit Vorteil werden gemeinsame Endpositionen des Ventilantriebs und des Schliesskörpers nach der Montage in einem Kalibrierverfahren definiert und vorteilhafterweise in einem Hubmodell im Stellantrieb abgespeichert.

In der Fig. 3b wirkt der Stössel 4 mit einer Stellkraft $F_B$ auf den Schliesskörper 30, der im dargestellten Zustand am Ventilsitz 32 aufliegt. Der Durchfluss q ist in diesem Zustand etwa 0%, das Ventil ist praktisch geschlossen.

In dem in der Fig. 3c dargestellten Zustand des Ventils wirkt der Stössel 4 mit einer - bezogen auf den in der Fig. 3b dargestellten Zustand - grösseren Stellkraft $F_C$ auf den Schliesskörper 30, so dass der Schliesskörper 30 in den ventilsitz 32 gepresst wird. Der Ventilsitz 32 ist hier beispielsweise aus einem elastischen Material, welches bei der entsprechend grossen Stellkraft $F_C$ vom Schliesskörper 30 verformt wird. Der Durchfluss q ist in diesem Zustand 0%, das Ventil ist dicht geschlossen.

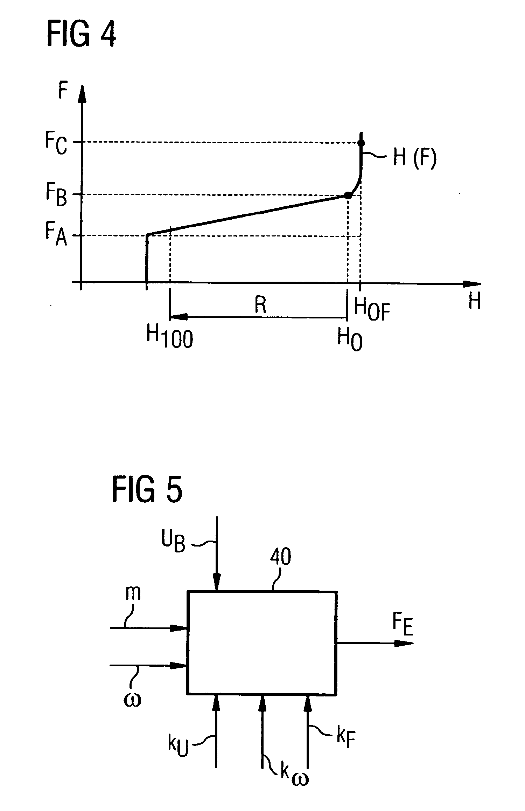

In der Fig. 4 ist ein Hubmodell des Ventils als prinzipieller Verlauf H(F) dargestellt. Der verlauf H(F) zeigt den Zusammenhang zwischen dem Hub H des Schliesskörpers 30 und der am Schliesskörper 30 angelegten Stellkraft F. Bis zu einem minimalen Wert $F_A$ bleibt der Schliesskörper 30 in der in der Fig. 3a dargestellten ersten Endlage. Damit der Schliesskörper 30 gegen den ventilsitz 32 hin bewegbar ist, muss der gegen die Feder 31 arbeitende Stössel 4 eine etwa linear zunehmende Stellkraft F überwinden. Bei einem gewissen Wert $F_B$ der Stellkraft ist im Diagramm ein zugehöriger Bezugswert Ho des Hubs eingezeichnet. Der Bezugswert $H_0$ entspricht einem Zustand des Stellglieds, bei dem der als Stellelement funktionierende Schliesskörper 30 den Ventilsitz 32 erreicht. Ein zusätzlicher Hub, über den Bezugswert $H_0$ hinaus gegen einen Absperrwert $H_{0F}$, erfordert eine stark überproportionale Erhöhung der Stellkraft F über den Wert $F_B$ hinaus gegen den Wert $F_C$. Die besagte überproportionale Erhöhung der Stellkraft F aber erfordert auch eine starke Zunahme der momentanen Leistung des Elektromotors 1 und damit einen entsprechend hohen Energieverbrauch.

In einem vorteilhaften Regelverfahren, in dem der Durchfluss q mit dem Stellglied 5 zu steuern ist, wird der Bezugswert $H_0$ möglichst nicht überschritten, sofern ein Energieverbrauch des Stellantriebs minimal sein soll, was bei einer Energieversorgung mittels Batterie mit Vorteil anzustreben ist.

In einem vorteilhaften Kalibrierungsverfahren für ein Stellglied, welches ein Stellelement mit wenigstens einer mechanisch blockierten Endlage aufweist, wird vorteilhafterweise eine vom Stellantrieb aufgebrachte Kraft oder ein vom Stellantrieb aufgebrachtes Drehmoment erfasst und beim Erreichen eines vorbestimmten Werts der Kraft bzw. des Drehmoments die aktuelle Position des Stellelements erfasst und als mechanische Endlage des Stellglieds bzw. des Stellelements abgespeichert und in einem Regelverfahren berücksichtigt.

Das Kalibrierungsverfahren wird beispielsweise über ein dem zweiten Regelmodul 13 (Fig. 1) zugeführtes Startsignal k ausgelöst. Mit Vorteil wird die Umlauffrequenz des Elektromotors 1 während des Kalibrierungsverfahrens auf einen gegenüber einem Normalbetrieb niederen Wert konstant gehalten, indem der vom zweiten Regelmodul 13 generierte Geschwindigkeitssollwert $\omega_S$ entsprechend angepasst wird.

Ist das Stellglied beispielsweise ein im Ruhezustand offenes Thermostatventil, dessen Hub H sich in Abhängigkeit von der Stellkraft F prinzipiell wie in der Fig. 4 dargestellt verhält, wird der Schliesskörper mit Vorteil nur im Kalibrierungsverfahren über den Bezugswert $H_0$ des Hubs hinaus bewegt.

Ein im Hubmodell des Stellantriebs abgespeicherter Regelbereich R (Fig. 4) wird mit Vorteil vom ermittelten Bezugswert $H_0$ abhängig festgelegt. Der Regelbereich R für das beispielhafte Thermostatventil umfasst damit für eine Regelung nutzbare Endlagen bei $H_0$ - also geschlossen, bzw. Durchfluss $q \cong 0\%$ - und $H_{100}$ - also offen, bzw. Durchfluss q = 100%.

Die Information des von der Sensoreinrichtung 8 (Fig. 1) gelieferte Signals s ermöglicht eine Berechnung der aktuellen Umlauffrequenz des Elektromotors 1 und der Bewegung des Stössels 4. Mit Vorteil ist im Berechnungsmodul 9 ein Hubmodell abgespeichert, in dem wichtige Parameter wie eine aktuelle Position des Schliesskörpers, Endpositionen des Schliesskörpers 30 und eine aktuelle Geschwindigkeit, vorzugsweise die aktuelle Umlauffrequenz des Elektromotors 1 oder bei Bedarf die aktuelle Geschwindigkeit des Schliesskörpers 30 verfügbar sind.

Die Sensoreinrichtung 8 umfasst vorzugsweise eine Lichtquelle und eine auf das Spektrum der Lichtquelle abgestimmte Detektoreinheit, wobei die Lichtquelle auf ein vom Elektromotor 1 bewegtes optisches Muster gerichtet ist, so dass bei laufendem Elektromotor 1 Lichtpulse auf die Detektoreinheit gelangen. Das optische Muster ist beispielsweise eine am Getriebe 2 angeordnete Scheibe mit optisch reflektierenden Zonen, oder mit Löchern oder Zähnen, die derart ausgebildet sind, dass ein Signal der Lichtquelle durch das bewegte optische Muster moduliert wird.

Grundsätzlich kann die Sensoreinrichtung 8 aber auch anders, beispielsweise mittels induktiv arbeitender Einrichtung implementiert werden.

In der zweiten Vergleichseinrichtung 12 wird aus dem Sollpositionssignal $p_s$ und dem vom Berechnungsmodul 9 ermittelten Positionssignal p eine Regeldifferenz $(p_s - p)$ gebildet und an das zweite Regelmodul 13 geleitet. Im zweiten Regelmodul 13 wird eine Führungsgrösse für die erste Vergleichseinrichtung 10 generiert. Die Führungsgrösse ist mit Vorteil ein Geschwindigkeitssollwert $\omega_s$. In der ersten vergleichseinrichtung 10 wird aus dem Geschwindigkeitssollwert $\omega_s$ und dem vom Berechnungsmodul 9 ermittelten Geschwindigkeitssignal $\omega$ eine Regeldifferenz $(\omega_s - \omega)$ gebildet und an das erste Regelmodul 11 geleitet. Im ersten Regelmodul 11 wird mit Hilfe der Regeldifferenz $(\omega_s - \omega)$ das Steuersignal m für das Motortreibermodul 7 generiert.

Durch die das erste Regelmodul 11 aufweisende innere Regelschleife wird die Drehzahl des Elektromotors 1 konstant gehalten. Damit sind auch rotierende Elemente des mit dem Elektromotor 1 mechanisch gekoppelten Getriebes 2 und des Transformationselements 3 zur Neutralisierung ihrer Massenträgheitsmomente jeweils auf konstante Umlauffrequenzen geregelt. Die Regelung des Elektromotors 1 auf eine konstante Umlauffrequenz bringt die Vorteile, dass auch ein drehzahlabhängiger Geräuschpegel des Stellantriebs konstant ist und durch geeignete Wahl des Geschwindigkeitssollwerts $\omega_s$ optimierbar ist. Ferner ist mit der besagten Geschwindigkeitsregelung der Vorteil verbunden, dass Selbstinduktion des Elektromotors 1 und Massenträgheitsmomente rotierender Elemente des Stellantriebs in der Berechnung eines aktuellen Schätzwerts $F_E$ für die Stellkraft F nicht berücksichtigt werden müssen.

Eine Endlage eines Stellelements ist zuverlässig bestimmbar, wenn das Stellelement gegen die Endlage hin bewegt wird und dabei durch ein Rechenmodul 40 (Fig. 5) des Stellantriebs wiederholt der aktuelle Schätzwerts $F_E$ für die Stellkraft F berechnet und mit einem vorbestimmten Grenzwert verglichen wird.

Mit Hilfe des am Motortreibermodul 7 angelegten Steuersignals m und der Batteriespannung $U_B$ ist der Schätzwert $F_E$ in einer ersten Variante nur näherungsweise mit einer linearen Formel A berechenbar. Das aus dem Steuersignal m, dem aktuellen Wert der Batteriespannung $U_B$ und einer ersten Konstante $k_U$ gebildete Produkt wird um eine zweite Konstante $k_F$ vermindert:

$$F_E = U_B \times k_U \times m - k_F \qquad \{ \text{ Formel A } \}$$

Dadurch, dass bei der Berechnung des Schätzwerts $F_E$ neben dem Steuersignal m auch noch das auf die erste vergleichseinrichtung 10 zurückgeführte Geschwindigkeitssignal $\omega$ verwendet wird, ergibt sich mit einer Formel B eine verbesserte Variante, in welcher der Schätzwert $F_E$ genauer berechenbar ist. Das Geschwindigkeitssignal $\omega$ wird mit einer dritten Konstante $k_\omega$ multipliziert und das resultierende Produkt vom Schätzwert $F_E$ abgezogen. Die mathematische Beschreibung des Antriebsmodells und damit die Formel B zur verbesserten Berechnung des Schätzwerts $F_E$ lautet also:

$$F_E = U_B \times k_U \times m - k_\omega \times \omega - k_F \qquad \{ \text{ Formel B } \}$$

Die Formel B zur Berechnung des Schätzwerts $F_E$ ist mit den drei Konstanten für eine mikroprozessorgerechte Implementierung optimiert aufgebaut. Es versteht sich von selbst, dass die Formel B durch mathematische Umformung, beispielsweise verbunden mit einer Erhöhung der Anzahl verwendeter Konstanten, ein geeigneter Schätzwert der Stellkraft berechenbar ist.

Mit wenig Aufwand können die drei Konstanten $k_U$, $k_\omega$, und $k_F$ so bestimmt werden, dass der Schätzwert $F_E$ für die Bestimmung der Endlage des Stellelements genügend genau berechenbar ist.

Durch die drei Konstanten $k_U$, $k_\omega$ und $k_F$ werden Kennwerte oder Eigenschaften des Elektromotors 1, des Motortreibermoduls 7, des Getriebes 8 und des Transformationselements 3 berücksichtigt.

Das Rechenmodul 40 umfasst eine vorteilhafterweise in einem Mikrocomputer des Stellantriebs abgespeicherte Datenstruktur und wenigstens eine vom Mikrocomputer ausführbare Programmroutine zur Berechnung des Schätzwerts $F_E$, Die aktuelle Batteriespannung $U_B$ wird zur Berechnung des Schätzwerts $F_E$ beispielhaft jeweils über einen Analogeingang des Mikrocomputers eingelesen.

In einer beispielhaften Implementierung des Rechenmoduls 40 sind die Eigenschaften des Motortreibermoduls 7 insbesondere mit der ersten Konstante $k_U$ berücksichtigt, während mit der zweiten Konstante $k_\omega$ vor allem Kennwerte des Elektromotors 1, wie beispielsweise Motorkonstante und Gleichstromwiderstand berücksichtigt sind. Das Getriebe 8 wird mit der dritten Konstante $k_F$ berücksichtigt. Ausserdem ist bei der Berechnung des Schätzwerts $F_E$ der wirkungsgrad des Stellantriebs berücksichtigt, indem er in jede der drei Konstanten $k_U$, $k_\omega$ und $k_F$ einfliesst.

Bezugszeichenliste

| | |
|---|---|
| 1 | Elektromotor |
| 2 | Getriebe |
| 3 | Transformationselement |
| 4 | Stössel |
| 5 | Stellglied |
| 6 | Spannungsquelle |
| 7 | Motortreibermodul |
| 8 | Sensoreinrichtung |
| 9 | Berechnungsmodul |
| 10 | vergleichseinrichtung, erste |
| 11 | Regelmodul, erstes |
| 12 | Vergleichseinrichtung, zweite |
| 13 | Regelmodul, zweites |
| 20 | Treibereinheit |
| 21 | Brückenschaltung |
| 22 | elektronischer Schalter |
| 23 | elektronischer Schalter |
| 24 | elektronischer Schalter |
| 25 | elektronischer Schalter |
| 30 | Schliesskörper |
| 31 | Feder |
| 32 | Ventilsitz |
| 33 | Antriebsspindel |
| 34 | Längsachse |
| 35 | Aussengewinde |
| 36 | Getrieberad |
| 37 | Luftspalt |
| 40 | Rechenmodul |
| $M_M$ | Drehmoment |
| $M_A$ | Antriebsmoment |
| H | Hub |
| F | Stellkraft |
| $F_A$ | Wert der Stellkraft (Ventilberührpunktkraft) |
| $F_B$ | Wert der Stellkraft (Schliesspunktkraft) |
| $F_c$ | Wert der Stellkraft (Ventilabsperrkraft) |
| s | Signal der Sensoreinrichtung |
| $\omega$ | Geschwindigkeitssignal |
| $\omega_s$ | Geschwindigkeitssollwert |
| p | Positionssignal |
| $P_S$ | Sollpositionssignal |
| $I_M$ | Strom durch den Elektromotor |
| m | Steuersignal |
| $H_0$ | Bezugswert |

| $H_{0F}$ | Absperrwert |
|---|---|
| q | Durchfluss |
| $F_E$ | Schätzwert für die Stellkraft |
| k | Startsignal |
| $k_U$ | Konstante, erste |
| $k_\omega$ | Konstante, zweite |
| $k_F$ | Konstante, dritte |
| $U_B$ | Batteriespannung |
| $U_M$ | Motorspannung |

**Patentansprüche**

1. Verfahren zur Betätigung eines an einem Stellglied (5) angeordneten Stellelements (30), dessen Position von einem Elektromotor (1) über eine mechanische Getriebeeinrichtung (2, 3, 4) mit einer auf das Stellelement (30) wirkenden Stellkraft (F) gegen einen mechanischen Anschlag hin bewegbar ist, wobei der Elektromotor (1) über ein elektronisches Motortreibermodul (7) speisbar ist, **gekennzeichnet durch** folgende Verfahrensschritte:

   - Regeln der Umlauffrequenz des Elektromotors (1) auf einen konstanten Wert,
   - Berechnen eines Schätzwerts ($F_E$) für die Stellkraft (F),
   - Vergleichen des Schätzwerts ($F_E$) mit einem vorbestimmten Grenzwert,
   - Erfassen einer aktuellen Position (p) des Stellelements (30) beim vorbestimmten Grenzwert und Zuordnen der erfassten Position an eine in einem Hubmodell abgespeicherte Endlage.

2. Verfahren nach Anspruch 1, **dadurch gekennzeichnet,**
   **dass** ein dem Motortreibermodul (7) zugeführtes Steuersignal (m) derart generiert wird, dass die Umlauffrequenz des Elektromotors (1) auf den konstanten Wert geregelt wird, und
   **dass** das Steuersignal (m) zur Berechnung des Schätzwerts ($F_E$) verwendet wird.

3. Verfahren nach Anspruch 2, **dadurch gekennzeichnet,**
   **dass** zusätzlich die Umlauffrequenz (ω) des Elektromotors (1) erfasst und in der Berechnung des Schätzwerts ($F_E$) verwendet wird.

4. Verfahren nach Anspruch 1, **dadurch gekennzeichnet,**
   **dass** der aktuelle Wert der Batteriespannung ($U_B$) erfasst und in der Berechnung des Schätzwerts ($F_E$) verwendet wird.

5. Verfahren nach einem vorangehenden Anspruch, **dadurch gekennzeichnet, dass** die Umlauffrequenz (ω) des Elektromotors (1) über eine geschlossene Regelschleife geregelt wird.

6. Verfahren nach einem vorangehenden Anspruch, **dadurch gekennzeichnet, dass** das Steuersignal (m) ein pulsweitenmoduliertes Signal ist.

7. Verfahren nach einem vorangehenden Anspruch, **dadurch gekennzeichnet,**
   **dass** dem Steuersignal (m) ein Wertebereich von 0 % bis 100 % zugeordnet ist.

8. Stellantrieb mit einem Mikrocomputer zur Betätigung eines an einem Stellglied (5) angeordneten Stellelements (30), dessen Position von einem Elektromotor (1) über eine mechanische Getriebeeinrichtung (2, 3, 4) mit einer auf das Stellelement (30) wirkenden Stellkraft (F) gegen einen mechanischen Anschlag hin bewegbar ist, wobei der Elektromotor (1) über ein elektronisches Motortreibermodul (7) speisbar ist, **gekennzeichnet durch**:

   - ein Regelmodul (11) zum Regeln der Umlauffrequenz des Elektromotors (1) auf einen konstanten Wert,
   - ein Rechenmodul (40) zum Berechnen eines Schätzwerts (FE) für die Stellkraft (F), und zum Vergleichen des Schätzwerts (FE) mit einem vorbestimmten Grenzwert,
   - ein Berechnungsmodul (9) zum Abspeichern eines Hubmodells, und zum Erfassen einer aktuellen Position (p) des Stellelements (30) beim vorbestimmten Grenzwert und Zuordnen der erfassten Position an eine im Hubmodell abgespeicherte Endlage.

**9.** Stellantrieb nach Anspruch 8, **gekennzeichnet durch**
eine an der Getriebeeinrichtung (2, 3, 4) angeordnete Sensoreinrichtung (8), **durch** welche ein Sensorsignal (s) generierbar ist, aus dem die Drehzahl bzw. Umlauffrequenz des Elektromotors (1) ermittelbar ist.

**10.** Stellantrieb nach Anspruch 9, **gekennzeichnet durch**
eine erste Vergleichseinrichtung (10) zur Generierung einer Regeldifferenz aus einem Geschwindigkeitssollwert ($\omega_s$) und einem von einem Berechnungsmodul (9) aus dem Sensorsignal (s) generierten Geschwindigkeitssignal ($\omega$), wobei in einem ersten Regelmodul (11) mit Hilfe der Regeldifferenz das Steuersignal (m) generierbar ist.

**11.** Stellantrieb nach Anspruch 10, **gekennzeichnet durch**
eine zweite Vergleichseinrichtung (12) zur Generierung einer Regeldifferenz ($p_s - p$) aus einem Sollpositionssignal ($p_s$) und einem vom Berechnungsmodul (9) aus dem Sensorsignal (s) generierten Positionssignal (p), wobei in einem zweiten Regelmodul (13) mit Hilfe der Regeldifferenz ($p_s - p$) der Geschwindigkeitssollwert ($\omega_s$) generierbar ist.

**12.** Stellantrieb nach einem der Ansprüche 8 bis 11, **gekennzeichnet durch**
ein im Stellantrieb abgespeichertes, veränderbares Hubmodell des Stellglieds.

## Claims

**1.** Method for operating an actuating element (30) arranged on an actuator (5) and whose position can be moved from an electric motor (1) towards a mechanical stop via a mechanical gear device (2, 3, 4) with the aid of an actuating force (F) acting on the actuating element (30), it being possible to feed the electric motor (1) via an electronic motor driver module (7), **characterised by** the following method steps:

- controlling the rotational frequency of the electric motor (1) to a constant value,
- calculating an estimate ($F_E$) for the actuating force (F),
- comparing the estimate ($F_E$) with a predetermined limiting value,
- detecting a current position (p) of the actuating element (30) for the predetermined limiting value and assigning the detected position to a final position stored in a travel model.

**2.** Method according to claim 1, **characterised in that** a control signal (m) fed to the motor driver module (7) is generated such that the rotational frequency of the electric motor (1) is controlled to the constant value, and that the control signal (m) is used to calculate the estimate ($F_{E)}$) .

**3.** Method according to claim 2, **characterised in that** the rotational frequency ($\omega$) of the electric motor (1) is additionally detected and is used in calculating the estimate ($F_E$) .

**4.** Method according to claim 1, **characterised in that** the current value of the battery voltage ($U_B$) is detected and is used in calculating the estimate ($F_E$).

**5.** Method according to a preceding claim, **characterised in that** the rotational frequency ($\omega$) of the electric motor (1) is controlled using a closed control loop.

**6.** Method according to a preceding claim, **characterised in that** the control signal (m) is a pulse-width-modulated signal.

**7.** Method according to a preceding claim, **characterised in that** the control signal (m) is assigned a value range from 0% to 100%.

**8.** Actuating drive having a microcomputer for operating an actuating element (30) arranged on an actuator (5) and whose position can be moved from an electric motor (1) towards a mechanical stop via a mechanical gear device (2, 3, 4) with the aid of an actuating force (F) acting on the actuating element (30), it being possible to feed the electric motor (1) via an electronic motor driver module (7), **characterised by**

- a control module (11) for controlling the rotational frequency of the electric motor (1) to a constant value,
- a computing module (40) for calculating an estimate ($F_E$) for the actuating force (F) and for comparing the estimate ($F_E$) with a predetermined limiting value,

- a calculation module (9) for storing a travel model, and for detecting a current position (p) of the actuating element (30) for the predetermined limiting value and assigning the detected position to a final position stored in the travel model.

9. Actuating drive according to claim 8, **characterised by** a sensor device (8) arranged on the gear device (2, 3, 4) and configured to generate a sensor signal (s) from which the speed or rotational frequency of the electric motor (1) can be determined.

10. Actuating drive according to claim 9, **characterised by** a first comparing device (10) configured to generate an error signal from a speed setpoint ($\omega_s$) and a speed signal ($\omega$) generated from the sensor signal (s) by a calculation module (9), a first control module (11) being configured to generate the control signal (m) with the aid of the error signal.

11. Actuating drive according to claim 10, **characterised by** a second comparing device (12) configured to generate an error signal ($p_s$ - p) from a desired position signal ($p_s$) and a position signal (p) generated from the sensor signal (s) by the calculation module (9), a second control module (13) being configured to generate the speed setpoint ($\omega_s$) with the aid of the error signal ($p_s$ - p) .

12. Actuating drive according to one of claims 8 to 11, **characterised by** a variable travel model of the actuating element which is stored in the actuating drive.

## Revendications

1. Procédé pour faire fonctionner un élément de réglage (30) situé sur un organe de réglage (5), élément dont la position peut être amenée contre une butée mécanique par un moteur électrique (1) par le biais d'un dispositif de transmission mécanique (2, 3, 4) et à l'aide d'une force de réglage (F) agissant sur l'élément de réglage (30), le moteur électrique (1) pouvant être alimenté par un module d'attaque de moteur électronique (7), **caractérisé par** les étapes de procédé suivantes :

   - réglage de la fréquence de rotation du moteur électrique (1) sur une valeur constante,
   - calcul d'une valeur estimée ($F_E$) pour la force de réglage (F),
   - comparaison de la valeur estimée ($F_E$) avec une valeur limite prédéterminée,
   - détection d'une position actuelle (P) de l'élément de réglage (30) pour la valeur limite prédéterminée et association de la position détectée à une position finale enregistrée dans un modèle de course.

2. Procédé selon la revendication 1, **caractérisé en ce qu'**un signal de commande (m) amené au module d'attaque de moteur (7) est généré de manière à ce que la fréquence de rotation du moteur électrique (1) soit réglée sur la valeur constante et
   à ce que le signal de commande (m) soit utilisé pour calculer la valeur estimée ($F_E$).

3. Procédé selon la revendication 2, **caractérisé en ce que** la fréquence de rotation ($\omega$) du moteur électrique (1) est saisie, en plus, et utilisée dans le calcul de la valeur estimée ($F_E$) .

4. Procédé selon la revendication 1, **caractérisé en ce que** la valeur actuelle de la tension d'accumulateur ($U_B$) est saisie et utilisée dans le calcul de la valeur estimée ($F_E$) .

5. Procédé selon l'une des revendications précédentes, **caractérisé en ce que** la fréquence de rotation ($\omega$) du moteur électrique (1) est réglée au moyen d'une boucle de régulation fermée.

6. Procédé selon l'une des revendications précédentes, **caractérisé en ce que** le signal de commande (m) est un signal modulé en largeur d'impulsion.

7. Procédé selon l'une des revendications précédentes, **caractérisé en ce qu'**un domaine de valeurs allant de 0% à 100% est associé au signal de commande (m).

8. Servomoteur avec un micro-ordinateur pour faire fonctionner un élément de réglage (30) situé sur un organe de réglage (5), élément dont la position peut être amenée contre une butée mécanique par un moteur électrique (1) par le biais d'un dispositif de transmission mécanique (2, 3, 4) et à l'aide d'une force de réglage (F) agissant sur l'élément de réglage (30), le moteur électrique (1) pouvant être alimenté par un module d'attaque de moteur électronique (7), **caractérisé par** :

- un module de réglage (11) pour régler la fréquence de rotation du moteur électrique (1) sur une valeur constante,
- un module informatique (40) pour calculer une valeur estimée ($F_E$) pour la force de réglage (F) et pour comparer la valeur estimée ($F_E$) avec une valeur limite prédéterminée,
- un module de calcul (9) pour enregistrer un modèle de course et pour détecter une position actuelle (p) de l'élément de réglage (30) pour la valeur limite prédéterminée et associer la position détectée à une position finale enregistrée dans le modèle de course.

9. Servomoteur selon la revendication 8, **caractérisé par** un dispositif de détection (8) situé au niveau du dispositif de transmission (2, 3, 4), grâce auquel peut être généré un signal de capteur (s) à partir duquel il est possible de déterminer la vitesse de rotation resp. fréquence de rotation du moteur électrique (1).

10. Servomoteur selon la revendication 9, **caractérisé par** un premier dispositif comparateur (10) pour générer une différence de réglage à partir d'une valeur de consigne de Vitesse ($\omega_s$) et d'un signal de vitesse ($\omega$) généré par un module de calcul (9) à partir du signal de capteur (s), le signal de commande (m) pouvant être généré dans un premier module de réglage (11) à l'aide de la différence de réglage.

11. Servomoteur selon la revendication 10, **caractérisé par** un second dispositif comparateur (12) pour générer une différence de réglage ($p_s$ - p) à partir d'un signal de position de consigne ($p_s$) et d'un signal de position (p) généré par le module de calcul (9) à partir du signal de capteur (s), la valeur de consigne de vitesse ($\omega_s$) pouvant être générée dans un second module de réglage (13) à l'aide de la différence de réglage ($p_s$ - p).

12. Servomoteur selon l'une des revendications 8 à 11, **caractérisé par** un modèle de course de l'organe de réglage modifiable enregistré dans le servomoteur.

## FIG 1

## FIG 2

## FIG 3A

## FIG 3B

## FIG 3C

## FIG 4

## FIG 5

**EP 1 727 274 B1**

**IN DER BESCHREIBUNG AUFGEFÜHRTE DOKUMENTE**

**In der Beschreibung aufgeführte Patentdokumente**

- DE 4107860 A1
- EP 0050960 A
- EP 1015800 A
- US 5829335 A